# EUROPEAN PATENT APPLICATION

(11) **EP 3 763 224 A1**
(43) Date of publication of application: **13.01.2021**
(21) Application number: 20185250.6
(22) Date of filing: 10.07.2020
(51) Int. Cl.: A23L 17/00

(54) **METHOD FOR THE TREATMENT OF JELLYFISH INTENDED FOR HUMAN CONSUMPTION WITHOUT THE USE OF ALUMINIUM SALTS AND PRODUCTS/INGREDIENTS OBTAINED BY THIS PROCESS**

(30) Priority: 11.07.2019 IT 201900011472
(71) Applicant: Consiglio Nazionale Delle Ricerche, 00185 Roma (IT)
(72) Inventor: LEONE, Antonella, 73016 San Cesario di Lecce (IT); BLEVE, Gianluca, 73100 LECCE (IT); GALLO, Antonia, 73100 LECCE (IT); RAMIRES, Francesca Anna, 73010 ARNESANO (IT); DE DOMENICO, Stefania, 73100 LECCE (IT); PERBELLINI, Ezio, 73022 CORIGLIANO D'OTRANTO (IT)
(74) Representative: Zaccaro, Elisabetta

(57) **Abstract**

The invention concerns a process that does not involve the use of aluminium salts (or alum) for the treatment of jellyfish biomass with the aim of making the tissues of some jellyfish species edible and usable for human food consumption.

Alum-free jellyfish tissues obtainable according to this process and uses thereof for the preparation of a food product are also described.

In another aspect, the use of the jellyfish tissue obtainable by the process as a flavour enhancer or food ingredient is described.

## Description

### FIELD OF THE INVENTION

The invention concerns a process for the treatment of jellyfish biomass without the use of aluminium salts (or alum) with the aim of making the tissues of some jellyfish species edible and usable for human food consumption.

Jellyfish tissues obtainable according to this process and uses thereof for the preparation of food products are also described.

In another aspect, the use of the jellyfish tissue obtainable by the process as a flavour enhancer or food ingredient is described.

### STATE OF THE ART

In recent years there has been an increase in the presence of jellyfish in various marine environments on the planet. The ongoing climate changes and the reduction in the number of predators seem to favour the proliferation of native species and also the settlement of jellyfish belonging to alien species in numerous coastal areas, including those of the Mediterranean. These proliferations, often characterised by sudden outbreaks, the so-called "blooms", create difficulties for fishing operations, often representing harmful by-catches, to aquaculture and mariculture plants and to coastal companies using sea water in cooling plants as well as to bathing and maritime tourism.

The food use of jellyfish is not new; in Asian countries such as China, Japan, Korea, they represent a millennial food tradition. However, both traditional and more recently developed procedures for the preparation of jellyfish-based foods, as well as formulated preparations for the traditional pharmacopoeia, are all based on an alum-salt dehydration process, handed down for centuries among experts (masters). The use of alum is always present in the processes used up to now, even in patented methods.

In traditional Chinese medicine as well as in food therapy, jellyfish are believed to be effective in treatments against arthritis, hypertension, osteo-articular pain, and ulcers. They would also appear to be effective as anti-fatigue and adjuvants in various pathophysiological states. However, many of these properties are mostly described in non-scientific publications written in Chinese and are not scientifically confirmed. Nevertheless, many jellyfish peptides and proteins have antioxidant capacity and can contribute to the endogenous antioxidant capacity of foods. Some Mediterranean jellyfish have shown nutritional and nutraceutical properties, as well as physico-chemical characteristics similar to Asian edible jellyfish (Leone et al., 2019; De Domenico et al. 2019; Leone et al., 2015; Leone et al. 2013; D'Amico et al., 2017).

The techniques known so far for the treatment of jellyfish for food purposes always involve the use of salt and alum (Hsieh et al., 2001; Brotz et al., 2017; Patent CN106889418 Processing method of jellyfish heads; Patent KR1020110107040 Producing method of salted jellyfish with chewy texture).

Preparation variants have also been proposed which include heat treatment steps ("blanching" or boiling in water for longer times, steaming or even cooking in oil) possibly before or after one or more soakings, for a few minutes, in organic acids such as acetic acid, malic acid, lactic acid, citric acid; these methods provide for thermal dehydration or alcohol-based dehydration, or UV treatments, or disinfectant agents such as hypochlorite and the like, or sonication, freezing and freeze-drying. The traditional production method of jellyfish for human food consumption, used by Asian countries, involves obtaining a semi-dehydrated product by a process with a variable duration of 20-40 days, which involves the separation of the oral arms from the umbrella, washing with sea water to remove mucus and gonads, adding powdered NaCl (2-20 h), applying KAl(SO₄)₂*12H₂O or AlNH₄(SO₄)₂*12H₂O (potassium alum or ammonium alum), at a concentration of about 3% for 24h, to cover the umbrellas, arranged in overlapping layers. This operation is repeated several times, gradually reducing the proportion of the alum salt. The washing is continued to remove the residual mucus and remove the alum, and NaCl only is applied again for about 48 hours. Then, jellyfish are dried at room temperature for 72 hours and subsequently stacked and placed under a weight to complete the mechanical dehydration. The product thus obtained can be stored for 1 year at room temperature and for 2 years at low temperature (Brotz et al., 2017). More recently, salt treatment is preceded by a microwave pre-treatment.

There are currently numerous scientific studies indicating neurotoxic effects due to dietary intake of aluminium salts and the European Food Safety Authority (EFSA) was called to express an opinion about (EFSA, 2008). Furthermore, to date there are no studies excluding that the concentrations of aluminium salts remaining in jellyfish-based food products are safe, and therefore there remains a risk that the ingestion of high level of these salts deriving from consumption of jellyfish as a food may cause neurotoxic effects. In fact, individuals ingesting large amounts of aluminium have been shown to exhibit high levels of Al in plasma. From the plasma, under normal physiological conditions, aluminium can enter the central nervous system through the blood-brain barrier and accumulate in the brain. Epidemiological investigations have shown that aluminium can cause memory impairment and cognitive dysfunction, which would lead to neurodegenerative diseases such as Alzheimer's and Parkinson's disease. An animal study also suggests the possible link between aluminium and Alzheimer's disease (Stahl et al., 2011; Bhattacharjee et al., 2014; EFSA, 2008). In addition, there is not much data available about aluminium content in jellyfish used as food, also due to the absence of controls in the countries of origin, but a recent work has shown the presence of an aluminium content ranging between 75-124 mg/kg in edible jellyfish (Cheng et al., 2017). Based on recent concerns about high accumulation of aluminium in the population, the Center for Food Safety of the Hong Kong Government has published guidelines expressing a strong interest in implementing strategies for the reduction or replacement of the use of aluminium as an additive and in the food preparation process, including jellyfish (https://www.cfs.gov.hk/english/programme/programme_rafs/files/Guidelines_on_t he_use_of_Al_additives_e.pdf).

In China, although in the National Food Safety Standard for Uses of Food Additives 2011 document (GB2760-2011) a PTWI (Provisional Tolerable Weekly Intake) of 2 mg/kg body weight is indicated for aluminium, data show that the intake levels could be much higher when considering products like jellyfish.

Several companies producing aquatic products pointed out that the maximum permitted level of aluminium residue of 100 mg/kg (dried samples, expressed as aluminium) cannot meet the qualitative requirements for jellyfish-based products and suggested to modify the maximum level of aluminium residue in jellyfish food additives into 1000 mg/kg (in ready-to-eat jellyfish-based products, expressed as aluminium), which significantly exceeds the limit value indicated in GB 2760-2011. Within the European Union (EFSA, 2008), the use of alum as a structuring agent for food suitable for human consumption is subject to limitations and is much more restrictive: for certain types of aluminium salts the TWI (Tolerable weekly intake) is 1 mg/kg body weight/week; however, the limits could be more restrictive and bound by the EFSA opinion of 22 May 2008 and of EU Regulation No. 231/2012 of 9 March 2012 (https://www.efsa.europa.eu/en/efsajournal/pub/754; https://eur-lex.europa.eu/legal-content/IT/TXT/PDF/?uri=CELEX:32012R0231&from=IT; https://www.efsa.europa.eu/en/press/news/080715-0; Stahl et al. 2011). According to these limits, all the jellyfish-based products currently on the market, mainly of Asian origin, would exceed the permitted levels of aluminium in Europe.

Many of the technologies proposed so far, can also significantly and uncontrollably modify the structure of the raw material (jellyfish) also negatively affecting the nature of collagen, the main and more valuable component from a nutritional and nutraceutical point of view. In addition, the application of many of the proposed methodologies does not guarantee preservation of the product organoleptic characteristics.

Edible jellyfish and jellyfish-based products have a high commercial value in Southeast Asia, so as to inspire the production of alternative products reminiscent of jellyfish; a patent filed in China (Patent Nr CN 1611130, filed in 2005) provides, in fact, for the use of alginate or alginic acid, edible gelatin and starch for producing a dough to be added with salt, to obtain a semi-finished solid product with characteristics of crispness and palatability reminiscent of jellyfish.

An updated list of edible jellyfish should also be made by considering the most recent literature both to distinguish the toxicity characteristics linked to the poisons of some species and to add Mediterranean species that are demonstrating edibility characteristics.

Moreover, a large gap to consider in the use of jellyfish-based products concerns the univocal definition of the possible pathogenic microorganisms and microbial toxins to be considered for an assessment of the risk parameters associated with the use of jellyfish as food, as well as objective standard parameters for assessing the product quality which could be a guarantee for the manufacturer, distributor and consumer.

Concerning these aspects, only partial data are available from patents' description since these documents miss or have very limited information about, or from the available scientific literature, which is very scarce. An example of alternative preparation of jellyfish of the *Catostylus tagi* species was produced in the study from Raposo et al. (2018) aimed at sensory analysis. The umbrellas were frozen at -80°C and then transferred to -20°C. Then, they were cut into cubes and cooked in the microwave. Finally, a sensory analysis was carried out on jellyfish cubes administered together with mayonnaise. Recently, a method of *Aurelia aurita* umbrellas dehydration with ethanol (Pedersen et al., 2017) was proposed in experimental works for the production of jellyfish chips.

The object of the present invention is therefore to provide a method, suitable for the treatment of jellyfish biomass for the production of food suitable for human consumption according to safety standards, and which does not present the above-mentioned disadvantages associated with the use of alum in the methods hitherto known for the same application.

### SUMMARY OF THE INVENTION

The present invention relates to a process which avoids the use of potentially toxic aluminium (or alum) salts for the treatment of jellyfish biomass (Schyphozoa, Cnidaria) and whose object is to make the tissues of some jellyfish species edible and suitable for human food consumption, increasing shelf life; the invention also refers to products/ingredients obtained by this process.

The invention concerns the treatment of jellyfish biomass and the production of food suitable for human consumption according to the safety and quality standards required by European legislation. The invention allows to overcome a food safety issue related to the use of alum, that is employed traditionally in Southeast Asia and in all processes currently in use globally for the transformation of edible jellyfish. The presence of alum in food can be toxic and its use is limited by food safety legislation, including European legislation.

At the present state of the art, the patent CN103355568 relates to the use of a mixture based on citric acid and calcium propionate and the patent CN106983094 relates to the use of a mixture of malic and lactic acid (in combination with a ultrasound treatment) to wash jellyfish that are **already previously prepared with the alum salts-based traditional method,** strictly for the purpose of reducing the presence of these toxic compounds in food preparations. In another patent, CN103393153, the combination of organic acids and salts such as sodium lactate, citric acid and vinegar is proposed for the formulation of an antibacterial mixture for the treatment of jellyfish **already previously prepared with the alum salts-based traditional method** in order to extend the shelf-life of the product.

The invention therefore concerns an alum-free process for the treatment of at least a fresh or fresh frozen jellyfish tissue to obtain an alum-free semi-finished product ready for food consumption, this process has the following steps:
a. washing said at least a jellyfish tissue with a solvent;
b. soaking the washed jellyfish tissue, obtained from step a., in a solution comprising an alpha-hydroxy organic acid and a calcium salt thereof, until obtaining a treated jellyfish tissue;
c. washing the treated jellyfish tissue obtained from step b., until removal of the solution comprising the alpha-hydroxy organic acid and a calcium salt thereof; and obtaining a semi-finished jellyfish tissue or product ready for food preparation.

In another aspect, the present invention relates to a semi-finished jellyfish tissue obtainable by the process for the treatment of at least a jellyfish tissue, said process having the steps of:
a. washing said at least a jellyfish tissue with a solvent;
b. soaking the washed jellyfish tissue, obtained from step a., in a solution comprising an alpha-hydroxy organic acid and a calcium salt thereof, until obtaining a treated jellyfish tissue;
c. washing the treated jellyfish tissue obtained from step b., until removal of the solution comprising the alpha-hydroxy organic acid and a calcium salt thereof; and obtaining a semi-finished jellyfish tissue or product ready for food preparation. The use of the semi-finished jellyfish tissue obtainable from the process for the treatment of at least a jellyfish tissue according to the present invention, for the preparation of at least a food product is also described.

In another aspect, the use of the jellyfish tissue obtainable from the process for the treatment of at least a jellyfish tissue according to the present invention as a flavour enhancer and/or a food ingredient is described. Jellyfish biomasses also present in European seas, and currently being only detrimental and having no commercial value, would be profitably usable for the production of food for human consumption by the process described in the present invention. Based on the present invention, and by means of the treatments object of the invention, both edible and still considered non-edible jellyfish species can be used.

The use of the raw material consisting of jellyfish would have the character of a sustainable food, given the peculiar life cycle of these organisms consisting in an adult stage (the specific material here used) and a polyp stage, sessile, which maintains the high reproductive capacity of this animal group. This sustainability character could distinguish the products from this invention as "Eco-labeled", according to the European directive (EC) No 66/2010 del 25 Novembre 2009.

### DESCRIPTION OF THE FIGURES

The invention will now be described in detail and with reference to the attached figures wherein le captions are listed here:

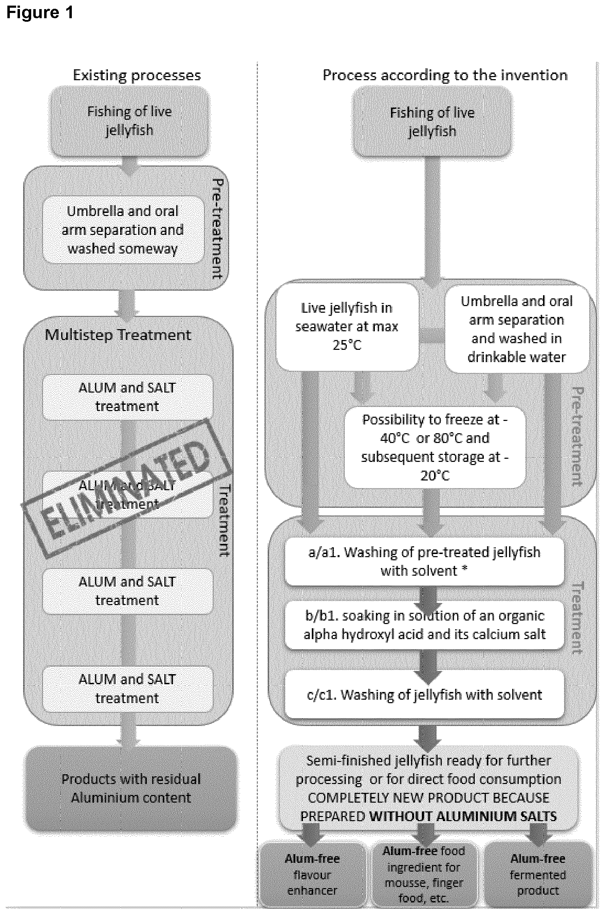

Figure 1; Flowchart scheme depicting the process and three products (purely by way of example) according to the present invention and compared with the already existing processes.
Figure 2. Photographs showing the oral arms and umbrella separation of a fresh jellyfish belonging to the *Cotylorhiza tuberculata* species (Figure 2A) and washing of the umbrella of the *Rhizostoma pulmo* species (Figure 2B).
Figure 3: Photograph showing jellyfish tissue treated with calcium citrate and dried in a fan oven in the presence of NaCl. Storage under vacuum.
Figure 4A: Image of jellyfish tissue treated with calcium citrate for 4 days, as described in Example 2, and then cut to obtain slices.
Figure 4B: Homogenization of the sample.
Figure 4C: Preparation of the jellyfish homogenate mixture.
Figure 4D: Preparation of food flavour enhancers/thickeners in food molds.
Figure 4E: Jellyfish-based food flavour enhancers/thickeners prototype.
Figure 5A: Jellyfish tissue treated with calcium citrate for 4 days, as described in Example 2, and then cut to obtain slices.
Figure 5B: Preparation of jellyfish homogenate mixture.
Figure 5C: Preparation of jellyfish-based cream by heating it on a thermal plate.
Figure 5D: Prototype of mousse containing jellyfish-based cream and other ingredients (e.g. tuna).
Figure 6A: Egg white whipping.
Figure 6B: Deposition of tufts prepared by semi-finished jellyfish and egg white.
Figure 6C: Prototype of jellyfish-based meringue.

### DETAILED DESCRIPTION OF THE INVENTION

The invention therefore concerns an alum-free process for the treatment of at least a fresh or fresh frozen jellyfish tissue, not involving the use of mixtures of aluminium salts, wherein said jellyfish tissue is not treated with aluminium salts (alum),, said treatment having the steps of:
a. washing said at least a jellyfish tissue with a solvent;
b. soaking the washed jellyfish tissue, obtained from step a., in a solution comprising an alpha-hydroxy organic acid and a calcium salt thereof, until obtaining a treated jellyfish tissue;
c. washing the treated jellyfish tissue obtained from step b., until removal of the solution comprising the alpha-hydroxy organic acid and a calcium salt thereof; and obtaining a semi-finished jellyfish tissue or product ready for food preparations.

The jellyfish tissue of step a. can derive from different sources not treated with alum, for example it can derive from: i) freshly caught jellyfish; ii) jellyfish fished and frozen (-40°C/-80°C) with a blast chiller and subsequent stored at -20°C; iii) fished jellyfish subjected to the separation of umbrella from oral arms, and then to the elimination of the oral cavity contents and extensive and repeated washing of the tissues in drinking water, and finally frozen (-40°C/-80°C) with a blast chiller and then stored at -20°C.

The process according to the present invention has the advantage of not using aluminium/alum salts or solutions comprising those salts, which have the problem of remaining in the finished product with the possibility of causing an accumulation at the body level that could exceed the intake levels deemed safe and result to be neurotoxic.

The elimination of the use of aluminium salts as a firming and structuring agent for the preparation of jellyfish results in a consequent greater healthiness of the food. In this way, unlike the jellyfish-based products currently on the market, the alum-free product here proposed, can comply with the European legislation. Indeed, which, considering the high persistence of aluminium in the human body, EU regulation has deemed appropriate to set a tolerable weekly dose (instead of a tolerable daily dose) equal to 1 mg/kg body weight/week.

In the present invention when the following definition is used:
- "Jellyfish tissue" is intended to encompass the biomass that is part of the umbrella and the oral arms or tentacles.

Advantageously, in the process of the present invention, the solvent of the washing step a. is seawater or freshwater.

The jellyfish separated into umbrella and oral arms, after removing the contents of the gastric cavity and gonads, are subjected to extensive washing in cold unsalted water and soaking in brines containing structuring agents for the jellyfish biomass. These structuring agents are solutions including an organic alpha hydroxy acid and a calcium salt thereof.

These agents, whose use in food products is regulated by European legislation, are able to drastically reduce the microbial load associated with jellyfish tissues and to inhibit the microbial growth, allow to completely eliminate the use of aluminium salts used in traditional Asian jellyfish preparations. Advantageously, the treatment according to the present invention limits or blocks possible deterioration of the jellyfish organic component and allows to remove the poisonous or stinging elements, while allowing to preserve and/or increase the antioxidant activity and the nutritional quality.

In a preferred embodiment, the process according to the present invention comprises a further step d. after step c., wherein the jellyfish tissue obtained from step c. is soaked again in a solution comprising an alpha-hydroxy organic acid and a calcium salt thereof.

Preferably said alpha-hydroxy organic acid of the steps b. and d. it is selected from the group consisting of citric acid, glycolic acid, lactic acid, mandelic acid, malic acid, phytic acid and tartaric acid.

Even more preferably, said alpha-hydroxy organic acid of the steps b. and d. is selected from the group consisting of citric acid and lactic acid.

Surprisingly, in the process according to the present invention, structuring agents were able to microbiologically stabilize the jellyfish tissues, to eliminate the stinging part, to maintain and/or improve the texture and consistency, while ensuring the maintenance of the main nutritional components and the nutraceutical properties.

In a further preferred embodiment, in the process according to the invention said at least a jellyfish tissue is selected from the group consisting of umbrella tissue and oral arm tissue.

In a further preferred embodiment, in the process according to the invention said washing step c. is carried out in freshwater.

In a further preferred embodiment, in the process according to the invention, said jellyfish belongs to the Scyphozoa class, and they can be caught in the sea or from aquaculture farms. In a preferred aspect, said jellyfish belongs to the *Rhizostoma pulmo* species.

In a further preferred embodiment, in the process according to the invention semi-finished jellyfish tissue is dried before consumption.

The availability of a standardized process, object of the present invention, will lead to products with quality and food safety characteristics in compliance with European laws, and the creation of a wide range of marketable products to be placed on the market. This can represent an opportunity to interpret the tastes of different groups of consumers and to offer different application possibilities and further development. The present invention could offer a number of different numerous variations of uses for jellyfish resource capable of satisfying both western and eastern market demands and solving some of the above described issues. Furthermore, since the increasing growth of immigrant communities of Asian origin in Europe is not negligible, a progressive increase in the number of potential consumers of the product can be expected.

In Southeast Asia, the demand for edible jellyfish exceeds the production, this making the increasing import of these products from other countries necessary, as already demonstrated by the growth of commercial jellyfish fishing in Mexico and the United States.

The products obtainable by the present invention show organoleptic profiles more similar to western-style products, positively influencing their acceptability in the western market. The new products could essentially be developed for a market that mostly does not know the corresponding currently available Asian ones and offers new sensorial food experiences and nutrients with a health value and role in the diet, as shown in our recent works.

Scientific knowledge about reproduction and life cycle is available for many jellyfish species. For some species of food interest, the breeding or production of juvenile edible jellyfish to be introduced into controlled environments and the creation of aquatic/mariculture jellyfish farms for obtaining commercial-sized samples are possible. The present invention represents a valid instrument for the exploitation of jellyfish grown in aquaculture.

On these bases, the sectors of interest are represented by the whole supply chain and in particular the fishing sector, with particular reference to the vulnerable sector of artisanal fishing, aquaculture/mariculture, the fishery products trade sector, the food processing sector, catering, the development of functional foods with nutraceutical value sector, additives and food ingredients sector.

In another aspect, the present invention relates to a semi-finished and alum-free jellyfish tissue obtainable from the treatment process of at least a jellyfish tissue, said process having the steps of:
a. washing said at least a jellyfish tissue with a solvent;
b. soaking the washed jellyfish tissue, obtained from step a., in a solution comprising an alpha-hydroxy organic acid and a calcium salt thereof, until obtaining a treated jellyfish tissue;
c. washing the treated jellyfish tissue obtained from step b., until removal of the solution comprising the alpha-hydroxy organic acid and a calcium salt thereof; and obtaining a semi-finished jellyfish tissue or product ready for the food preparation.

The conceived process produces stable jellyfish-based semi-finished products that can be conserved and stored for longer times and then used in different formulations.

Semi-finished products can provide a wide range of products and can be used as ingredients and/or additives with a wide applicability in different types of food products including traditional products.

The use of jellyfish tissue obtainable from the treatment process of at least a jellyfish tissue according to the present invention for the preparation of a food product is also described.

The aim of the process is to obtain a semi-finished product which in turn could be subjected to subsequent processes such as drying, cooking, grinding, addition of thickening agents for the preparation of food ready for human consumption and/or innovative formulated products to be used as flavour enhancers and/or food ingredient.

Some preferred embodiments are:
a. Dried jellyfish, in pieces or strips, and packaged in a modified atmosphere and stored in the fridge, in the presence or not of soaking fluid, to formulate new product prototypes.
b. Products for haute cuisine obtained by vacuum or microwave cooking or frying in an air fryer with or without added ingredients and/or seasonings.
c. Product lines with characteristics of flavour enhancers and thickeners capable of conferring innovative aromas, flavours and consistency to first and second courses of European and non-European cuisine. Possible addition of natural ingredients such as vegetable extracts (olives, artichokes, courgettes, mushrooms, peppers, capers, tomatoes, etc.) and fruit (grapes, pomegranate, apple, pear, etc.), vegetable puree, fruit puree, cooked fish or seafood (such as tuna, salmon, shrimp, etc.), spices (pink pepper, etc).
d. Product lines with characteristics of mousse and/or spreadable creams to be used for the preparation of appetizers, snacks or dressing for first courses. These products can be made with the addition of cooked fish (tuna, cod, salmon, etc.), vegetable puree, pickles and in oil vegetables (capers, dried tomatoes, aubergines, peppers, etc.). Possibly with the addition of egg white for making meringues or other baked products to be served as finger food.
e. Fermented products obtained by using selected yeast and lactic acid bacteria strains, possibly with probiotic characteristics. Fermentation is used in order to obtain the development of a product with improved or new organoleptic and nutritional characteristics.
f. Jellyfish-based products enriched with antioxidant compounds both naturally and through the addition of simple or complex phenols, single or in combination, (such as caffeic acid, ferulic, rutin, quercetin, etc.)

In another aspect, the use of jellyfish tissue obtainable from the process for the treatment of at least a jellyfish tissue according to the present invention, as a flavour enhancer or food ingredient is described.

In a preferred form, the product obtained is supplemented with a nutraceutical characterization that indicates its health-giving properties by using the antioxidant activity of the final product as a parameter.

The product deriving from the process object of the invention is completely different from the products currently on the market, mainly of Asian origin. The innovation introduced with the present invention provides a semi-finished product which is microbiologically safe and stable in terms of content in proteins, lipids, antioxidant compounds, **without the use of alum or other aluminium salts.** For this purpose, the main microbiological and biochemical parameters to be added to the chemical-physical ones (pH, total salinity, NaCl content, texture) in order to obtain an exhaustive picture of the state of quality and safety during the processing stages and the finished product, according to current legislation (Commission Regulation (EC) No 1441/2007 of 5 December 2007 amending Regulation (EC) No 2073/2005; Bleve et al., 2019) were identified.

Examples of embodiments of the present invention are given below for illustrative purposes.

### EXAMPLES

### Example 1:

### Preparation of brines containing structuring agents for the jellyfish biomass.

These structuring agents are solutions comprising an organic alpha-hydroxy acid and a calcium salt thereof.

### Calcium citrate tetrahydrate brine pH 5

0.1 M Calcium citrate (E333) solution. Dissolve 57.05 g of powder in 1 L of water. 1M Citric acid solution. Dissolve 1.92 g of powder per 10 mL of water.

1 M Calcium carbonate (E170) solution. Dissolve 10.00 g of powder in 100 mL of water.

### Calcium L-lactate hydrate brine pH 5

0.1 M Calcium lactate hydrate (E327) solution. Dissolve 21.82 g of powder in 1 L of water.

1M Lactic acid solution. Add 1 mL of L-lactic acid per 10 mL of water.

1 M Calcium carbonate (E170) solution. Dissolve 10.00 g of powder in 100 mL of water.

### Example 2

### The method consists of a multistep process:

Step 1. Use of fresh jellyfish caught no more than 5-7 hours before and kept in chilled sea water (4°C)
*Alternative 1.*

Jellyfish caught and frozen (with blast chiller) and then stored at -20°C, thawed in ice in the fridge (at 4°C) for at least one night.

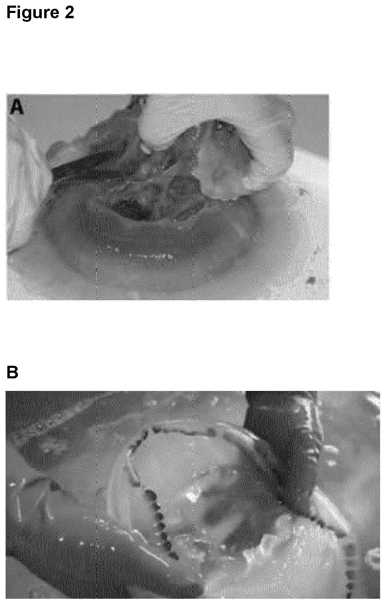

Step 2. Separation of the umbrella from the oral arms (Figure 2A).

Step 3. First extensive washing of umbrellas and oral arms (Figure 2B) with drinking water to remove the mucoid part and removal of the gonads and the contents of the gastric cavity (optional, with the aid of food diggers in stainless steel or not oxidizable material for food, e.g. plastic). Repetition of the above washing operation for at least two more times.

Step 4a. *Alternative procedure.* The tissues deriving from Step 3 can be frozen (with blast chiller) and then stored at -20°C.

Step 5a. *Alternative 1*. To be used in order to increase the consistency (texture) and to stabilize the treated tissue from an enzymatic and microbiological point of view.

Soaking of umbrellas and oral arms in 0.1 M calcium citrate or 0.1 M calcium lactate solution (recommended in a 1:1 ratio, mass of jellyfish:solution) in glass or food-grade plastic containers. Leave for 30-60 minutes at room temperature. Bring the preparations to pH 5 by adding a 1M citric acid or 1M lactic acid solution. Incubate the preparations in the fridge (at 4°C) for 4-5 days.

Step 5b. *Alternative 2.* To be used to further increase the consistency (texture) of the treated tissue compared to *alternative 1.*

Immersion of umbrellas and oral arms in 0.1 M calcium citrate or 0.1 M calcium lactate solution (recommended in a 1:1 ratio, jellyfish mass:solution) in glass or food-safe plastic containers. Leave to act for 30-60 minutes at room temperature. Bring to pH 4 with 1M citric acid (about 3 mL) per liter of 0.1 M calcium citrate solution and 1M lactic acid (about 15-20 mL) per liter of 0.1 M calcium lactate solution, respectively. Incubate for about 30-60 minutes at room temperature. Bring the preparations to pH 5 by adding a 1M CaCO₃ solution (about 50 mL per liter of 0.1 M calcium citrate solution at pH 4 and about 35 mL per liter of 0.1 M calcium lactate solution at pH 4). Incubate the preparations in the fridge (at 4°C) for 4-5 days.

In this method, the use of calcium-based organic acid salts is proposed as an alternative to aluminium derivatives. The latter are, in fact, widely used by the Asian tradition in the methods for preparing jellyfish for human consumption currently on the market. According to a study conducted by EFSA in 2008 and by the FAO/WHO expert committee on food ingredients/additives with a risk of having a high persistence in the human body, a tolerable weekly dose of 1 mg/kg body weight/week was established.

Due to its chemical properties, Ca⁺⁺ is used as a structuring agent allowed in the food sector, and herein it is used to maintain and/or improve the texture of the jellyfish tissue. This ion is proposed as an alternative to other structuring agents, such as iron and chromium. The latter have been used in research work as alternatives to aluminium in the traditional Asian method for obtaining a "rubber-like" consistency for jellyfish. However, these are salts that are usually used in non-food processes such as leather tanning (Pedersen et al., 2017). In the method proposed herein, the use of organic acids commonly used in food preparations and recognized by European legislation has the aim of acidifying the product and reducing the development of undesired enzymatic activities and microorganisms, improving the texture and enriching the semi-finished product of aromas and flavours.

Step 5c. *Alternative 3.* Soaking of umbrellas and oral arms in freshwater (recommended in a 1:1 ratio) in sanitized glass or food plastic containers. Incubation at 4°C for 18-24 hours. This alternative allows to obtain a product with lower saline content.

Step 6. (Optional) Removal of used brine (or water) and immersion in fresh brine. Incubation at 4°C for another 3 days.

Step 7. Jellyfish obtained after steps 5, alternative 1, alternative 2, or step 6 (respectively at day 4 and/or 7) can be frozen at -20°C and used for subsequent preparations. Alternatively, they can be processed immediately to obtain, after extensive washing in drinking water to remove the brines, different preparations such as jellyfish in strips or cubes, dried or cooked under vacuum, flavouring enhancers and thickeners for fish-based dishes from pre-treated jellyfish in brine or from fermented jellyfish, ingredients for mousses, spreads, dressings for first courses, and finger foods (i.e. meringues); all these products can be enriched with antioxidant phenolic compounds of vegetable origin which improve their antioxidant and shelf life properties.

These types of preparations have been designed to make products acceptable to the European market considering the tastes and organoleptic appeal of Western populations, and the quality, safety and nutritional standards of food products in the European Union. In addition, the antioxidant activity of the raw material and possible nutraceutical activities are preserved or improved in these products.

### Example 3:

### Preparations:

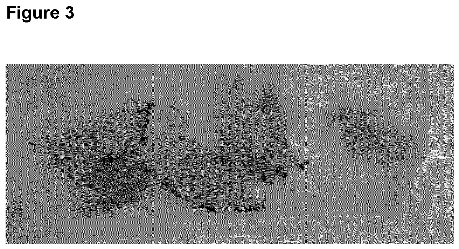

a. Drying at 40-60°C in a fan oven (possibly in a stove under vacuum) and in the presence of 30% (w/w) NaCl to reduce the percentage of water from 95% to about 75%, and bring the activity of the water to about 0.8 aw. Jellyfish thus prepared can be cut into pieces or strips and packaged in a modified atmosphere and stored in the fridge, in the presence or not of soaking fluid (Figure 3).
   Vacuum cooking in appropriate plastic bags for vacuum cooking of food with or without the addition of added ingredients and/or seasonings. Temperatures can vary from 60°C to 95°C and times can vary according to weight.
b. Homogenization and addition of food thickeners such as corn starch, rice starch, tapioca starch, potato starch, carrageenan, xanthan gum, carob flour, rice flour, tare gum, pectins, etc. Possible addition of ingredients of natural origin such as plant extracts (olives, artichokes, courgettes, mushrooms, peppers, capers, tomatoes, etc.) and fruit or seeds (grapes, pomegranate, apple, pear, grape seeds, etc.). The mixture is heated until obtaining a homogeneous consistency, pasteurized and dispensed in containers of various shapes to produce a product with characteristics of flavour enhancer and thickener for fish-based dishes.
c. Homogenization and addition of food thickeners such as corn starch, rice starch, tapioca starch, potato starch, carrageenan, xanthan gum, carob flour, rice flour, tare gum, pectins, etc. Addition of cooked fish such as tuna, salmon, prawns, etc., or vegetable puree, fruit puree, and possibly egg whites for whipping. The mixture is mixed until a homogeneous consistency is obtained and dispensed in glass jars and sterilized to produce a product with characteristics of a mousse, spreadable cream, dressing for first courses and finger foods (e.g. meringues).
d. Inoculation of selected yeast strains and lactic bacteria, possibly with probiotic characteristics, and fermentation in order to obtain a product with improved organoleptic and nutritional characteristics compared to the raw material. Preparation of a product with flavour enhancer and thickener characteristics.
e. Addition of simple or complex phenols, single or in combination (such as caffeic acid, ferulic acid, rutin, quercetin, etc.) in variable concentrations (5-40 mg/g of gelatin) and incubation for 18-20 hours at 4°C and subsequent processing following one of the possible alternatives shown above.

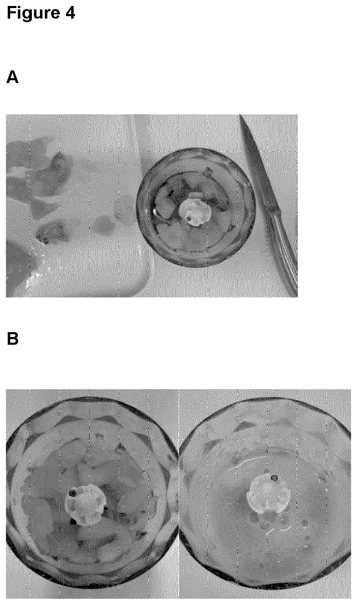

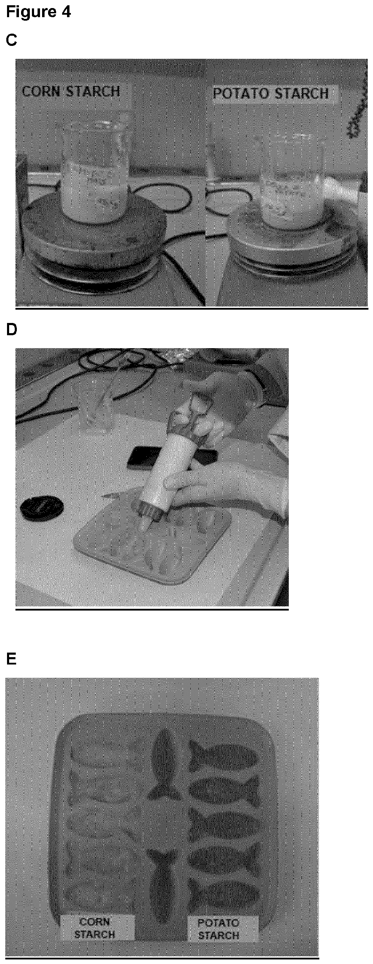

The preparation steps are shown in Figures 4, 5 and 6.

### Example 4

### Preparation of jellyfish-based flavour enhancer/thickener.

1. Jellyfish treated with organic acid salts (according to the procedure of the present invention) and subsequently frozen, was thawed, washed with drinking water and sliced into pieces of about 1.5-2 cm (Figure 4A).
2. Homogenization in blender or mixer (Figure 4B).
3. Preparation of a mixture containing the jellyfish homogenate, corn starch or potato starch (12% w /w) in beaker with magnetic stirrer. Stirring cold for 5 min and then heating the thermal plate in order to reach the boiling temperature for a few seconds and use the thermal flywheel as a pasteurizing effect (Figure 4C).
4. Transfer the product into a piping bag to aliquot the flavour enhancer/thickener into food molds (Figure 4D e 4E).
5. Allow to cool and solidify overnight in the fridge (Figure 4E).

### Example 5

### Preparation of jellyfish and fish mousse (e.g. tuna), or jellyfish and other edible invertebrates mousse

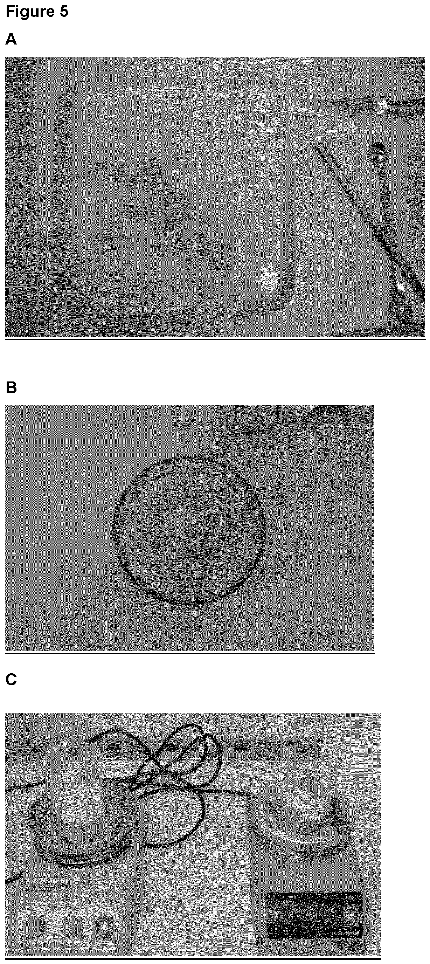

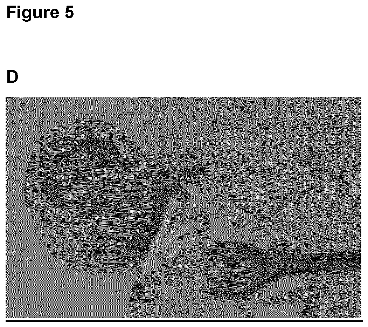

1. A sample of jellyfish umbrellas and oral arms treated with organic acid salts as described in Example 2 and frozen, was thawed, washed with drinking water and sliced into pieces of about 1.5 cm (Figure 5A).
2. Homogenization in a blender (Figure 5B).
3. Preparation of the mixture (jellyfish base cream): 50 g jellyfish homogenate, 4 g corn starch in beaker with magnetic stirrer. Stirring cold for 5 min and then heating the thermal plate in order to reach the boiling temperature for a few seconds and use the thermal flywheel as an incorporating and pasteurizing effect (Figure 5C).
4. Preparation of 50 g of drained natural (pre-cooked) tuna in a blender (e.g. tuna:jellyfish ratio, 1:1, but may vary).
5. Addition of the blended tuna to the jellyfish base cream prepared in step 3. Homogenization with a whisk until the jelly and tuna mousse is formed.
6. Filling a 100 g glass jar (Figure 5D).

### Example 6

### Preparation for jellyfish-based meringue

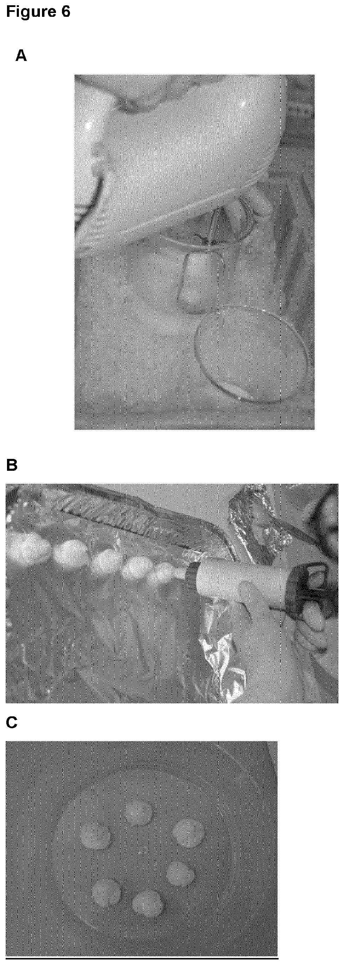

1. Step 1-3 as in Example 5
2. Cool the jellyfish base cream on ice
3. Whip the egg whites until stiff (Figure 6A).
4. Incorporate about 50 g of beaten egg whites into 50 g of jellyfish base cream
5. Transfer the product into a piping bag and form tufts of about 3 cm in diameter, well-spaced from one another, on a coated tray (Figure 6B).
6. Static oven cooking preheated to 75°C for about 2 hours or in a fan oven at 105°C for 1 hour

From the detailed description and the Examples above, the advantages achieved by the process of the present invention are apparent. In particular, this method, does not use aluminium salts for stabilization but other compounds whose food use is allowed and regulated by European laws and, being fast and extremely easy to perform, it can be conveniently carried out in any type of laboratory. Furthermore, the resulting semi-finished product represents the basis of numerous other products, which are always alum-free, with an extremely wide range of applications.

### BIBLIOGRAPHIC REFERENCES

Bhattacharjee, S., Zhao, Y., Hill, J. M., Percy, M. E., & Lukiw, W. J. (2014). Aluminium and its potential contribution to Alzheimer's disease (AD). Frontiers in aging neuroscience, 6, 62. doi:10.3389/fnagi.2014.00062
Brotz L, Schiariti A, Lopez-Martinez J, Alvarez-Tello J, PeggyHsieh YH, Jones RP et al (2017) Jellyfish fisheries in the Americas: origin, state of the art, and perspectives on new fishing grounds. Rev Fish Biol Fish 27(1):1-29. https ://doi.org/10.1007/s1116 0-016-9445-y
Cheng, D., Zhang, X., Li, X., Hou, L., Wang, C. (2017) Determination of Aluminium in Edible Jellyfish Using Chrome Azurol S with Spot Test on Filter Paper. Analytical Sciences, 2017, 33(2): 185-189, https://doi.org/10.2116/analsci.33.185, https://www.jstage.ist.go.jp/article/analsci/33/2/33 185/ article/-char/en
D'Amico, P., Leone, A., Giusti, A., Armani, A. (2016) Jellyfish and Humans: Not Just Negative Interactions. In: G.L. Mariottini (Ed.) Jellyfish: Ecology, Distribution Patterns and Human Interactions. (Chapter 16) Nova Science Publishers, Inc. NY De Domenico S, De Rinaldis G, Paulmery M, Piraino S, Leone A. (2019). Barrel Jellyfish (Rhizostoma pulmo) as source of antioxidant peptides. Mar. Drugs 2019, 17, 134; doi:10.3390/md17020134.
European Food Safety Authority (EFSA). (2008). Safety of aluminium from dietary intake-Scientific Opinion of the Panel on Food Additives, Flavourings, Processing Aids and Food Contact Materials (AFC). EFSA Journal, 6(7), 754, 1-34 https://doi.org/10.2903/j.efsa.2008.754
Hsieh Y-HP, Rudloe J (1994) Potential of utilizing jellyfish as food in Western countries. Trends Food Sci Technol 5(7):225-229. https ://doi.org/10.1016/0924-2244(94)90253 -4
Hsieh YHP, Leong FM, Rudloe J (2001) Jellyfish as food. Hydrobiologia, 451:11-17. https ://doi.org/10.1023/A: 10118 75720 415
Huang YA (1988) Cannonball jellyfish (Stomolophus meleagris) as a food resource. J Food Sci 53(2):341-343. https ://doi.org/10.1111/j.1365-2621.1988.tb077 01.x Leone, A., Lecci, R.M, Milisenda, G., Piraino, S. (2019) Mediterranean jellyfish as novel food: effects of thermal processing on antioxidant, phenolic, and protein contents. Eur Food Res Technol. https://doi.org/10.1007/s00217-019-03248-6
Leone, A., Lecci, R.M., Durante, M., Meli, F., Piraino, S. (2015). The bright side of gelatinous blooms: nutraceutical value and antioxidant properties of three Mediterranean jellyfish (Scyphozoa). Marine Drugs, 13(8), 4654-4681; https://doi.org/10.3390/md13084654
Leone, A., Lecci, R.M., Durante, M., Piraino, S. (2013). Extract from the zooxanthellate jellyfish Cotylorhiza tuberculata modulates gap junction intercellular communication in human cell cultures. Marine Drugs, 11, 1728-1762; https://doi.org/10.3390/md11051728.
Pedersen, M.T., Brewer J.R., Duelund L., Hansen P.L. (2017) On the gastrophysics of jellyfish preparation. International Journal of Gastronomy and Food Science. 9, 34-38, https://doi.org/10.1016/j.ijgfs.2017.04.001
Raposo, A., Coimbra, A., Amaral, L., Gonçalves, A., Morais, Z. (2018). Eating jellyfish; safety, chemical and sensory properties. J Sci Food Agric 98(10):3973-3978
Stahl, T., Taschan H., Brunn H. (2011) Aluminium content of selected foods and food products. Environmental Sciences Europe Bridging Science and Regulation at the Regional and European Level 201123:37. https://doi.org/10.1186/2190-4715-23-37
Bleve G, Ramires FA, Gallo A, Leone A. (2019). Identification of Safety and Quality Parameters for Preparation of Jellyfish Based Novel Food Products. Foods. 8(7). pii: E263. doi: 10.3390/foods8070263.

## Claims

1. An alum-free process for the treatment of at least one fresh or fresh frozen jellyfish tissue not involving the use of mixtures of aluminium salts, wherein said jellyfish tissue is not treated with aluminium salts (alum), said process having the steps of:
a. washing said at least one jellyfish tissue with a solvent;
b. soaking the washed jellyfish tissue, obtained from step a., in a solution comprising an alpha-hydroxy organic acid and a calcium salt thereof, until obtaining a treated jellyfish tissue;
c. washing the treated jellyfish tissue obtained from step b., until removal of the solution comprising the alpha-hydroxy organic acid and a calcium salt thereof; and obtaining a semi-finished jellyfish tissue or product ready for food preparation.

2. The process according to claim 1, wherein the solvent of said washing step a. is salt water or freshwater.

3. The process according to any one of claims 1 o 2, comprising a further step d. after step c., wherein the jellyfish tissue obtained from step c. is soaked again in a solution comprising an alpha-hydroxy organic acid and a calcium salt thereof.

4. The process according to any one of claims 1 to 3, wherein said at least a jellyfish tissue is selected from the group consisting of umbrella tissue and oral arm tissue.

5. The process according to any one of claims 1 to 4, wherein said alpha-hydroxy organic acid of steps b. and d. is selected from the group consisting of citric acid, glycolic acid, lactic acid, mandelic acid, malic acid, phytic acid, and tartaric acid.

6. The process according to any one of claims 1 to 5, wherein said alpha-hydroxy organic acid of steps b. and c. is selected from the group consisting of citric acid and lactic acid.

7. The process according to any one of claims 1 to 6, wherein said washing step c. is carried out in freshwater.

8. The process according to any one of claims 1 to 7, wherein said jellyfish belongs to the Scyphozoa class.

9. The process according to any one of claims 1 to 8, wherein said semi-finished jellyfish tissue is dried before food consumption.

10. Semi-finished jellyfish tissue or product obtainable from the process according to any one of claims 1 to 9.

11. Use of the semi-finished jellyfish tissue or product according to claim 10, for the preparation of a food product.

12. Use of the semi-finished jellyfish tissue or product according to claim 10, as a flavour enhancer or a food ingredient.
